# EUROPEAN PATENT SPECIFICATION

(11) **EP 3 079 031 B1**
(45) Date of publication and mention of the grant of the patent: **08.01.2020**
(21) Application number: 16160076.2
(22) Date of filing: 14.03.2016
(51) Int. Cl.: B25J 13/08, B25J 19/02, G05D 1/00, G06K 9/00, G06T 7/73, G05D 1/02

(54) **MOVING ROBOT AND METHOD OF RECOGNIZING LOCATION OF MOVING ROBOT**
BEWEGLICHER ROBOTER UND VERFAHREN ZUR ORTSERKENNUNG EINES MOBILEN ROBOTERS
ROBOT MOBILE ET PROCÉDÉ DE DÉTERMINATION DE LA LOCALISATION D'UN ROBOT MOBILE

(30) Priority: 08.04.2015 KR 20150049606
(43) Date of publication of application: 12.10.2016
(73) Proprietor: LG Electronics Inc., Seoul 07336 (KR)
(72) Inventor: SHIN, Yongmin, Seoul 08592 (KR); NAM, Kyungmin, Seoul 08592 (KR)
(74) Representative: Ter Meer Steinmeister & Partner

(56) References cited:
- EP-A2- 2 450 762
- KR-A- 20110 085 500
- KR-B1- 101 303 161

## Description

### BACKGROUND

The present disclosure relates to a moving robot and a method of recognizing the location of the moving robot.

Developed for industrial uses, a robot generally has been in charge of a part of factory automation. Recently, since the application fields of robot has further expanded more, a medical robot, an aerospace robot, etc. are being developed, and a home robot that can be used in an ordinary household is being produced.

A robot cleaner, which is a representative example of the home robot, is a kind of a home appliance that cleans a predetermined area by suctioning the surrounding dust or foreign substances while moving within a predetermined area autonomously. The robot cleaner generally has a rechargeable battery and an obstacle sensor that can avoid obstacles while moving, thereby performing cleaning while autonomously moving.

These days, an application technology using a moving robot, particularly the robot cleaner, is being developed.

A method of recognizing the location of an intelligent moving robot that recognizes land marks on lateral sides thereof is disclosed in Korean Patent Publication No. 1305405 (Publication date: September 2, 2013).

In the above document, an image of a ceiling is captured by a robot mounted with a camera facing upward, and a ceiling part of the image is separated from a wall part (lateral part) thereof. The separated images are flattened, and then by extracting characteristics to be registered as a landmark, location recognition is performed.

However, according to the document, since landmarks on lateral sides thereof are used, 3-dimensional (3D) virtual coordinates are inaccurate. Also, when errors caused by wheel skids are accumulated, a location error may become extremely large. Since the location is recognized by only using a camera, a problem occurs in which it is difficult to extract characteristics in the dark.

KR 2011 0085500 A describes a robot cleaner having a wall recognizing unit with a distance measuring part which measures a distance to the wall and outputs distance information, a line segment extracting part which extracts line segments based on the distance information from the distance measuring sensor, and a camera which is formed in a main body and outputs image information.

KR 101303161 B1 describes recognizing the position of a mobile robot using video information and obstacle information. A first characteristic line extracting unit extracts characteristic points from video information obtained from surroundings, and extracts a first characteristic line using the characteristic points. A second characteristic line extracting unit extracts one or more second characteristic lines using obstacle information about obstacles of surroundings. A position recognizing unit matches the first and second characteristic lines, and recognizes the position based on the matching result.

EP 2450762 A2 describes a method for controlling a robot cleaner. A region to be cleaned is divided into a plurality of sectors, and a partial map for each sector may be generated. In an example, creating a partial map includes determining whether a feature line extracted from detection data is similar to a previously-extracted feature line, and merging the two feature lines together if they are similar to each other as a result of the determination.

### SUMMARY

The invention is defined by the independent claims 1 and 7. Further embodiments are indicated in the dependent claims.

The present disclosure is to provide a moving robot capable of accurately recognizing a current location and a method of recognizing a location of the moving robot.

The present disclosure is to provide a moving robot capable of recognizing a current location in the dark and a method of recognizing a location of the moving robot.

According to the present invention a moving robot includes a first location recognition module for extracting a straight line in a driving process and recognizing a location using the extracted straight line, and a second location recognition module for recognizing a location based on the location recognized by the first location recognition module and based on the image information obtained from the surroundings.

The moving robot may further comprise a capturing device configured to obtain the image information.

The second location recognition module recognizes a location when the capturing device is able to be used, and determines the location recognized by the first location recognition module as a final location when the capturing device is not able to be used.

The moving robot further comprises a distance sensor.

The moving robot further comprises a memory configured to store the straight line extracted by the first location recognition module.

The first location recognition module includes: a straight line information extracting unit configured to extract straight line information from values output from the distance sensor; a straight line information matching unit configured to determine whether the straight line extracted from the straight line information extracting unit is the same as the previously extracted straight line stored in the memory; a straight line information registering unit configured to store the straight line in the memory when the extracted straight line is a new straight line and extend the previously extracted straight line when the extracted straight line is the same as the previously extracted straight line; and a first location recognizing unit configured to recognize a current location using the straight line registered by the straight line information registering unit.

The second location recognition module may include: an image characteristic extracting unit configured to extract a plurality of characteristic points by performing image-processing on the image information obtained from the capturing device; an image characteristic matching unit configured to match the plurality of characteristic points based on information on at least two successively captured images; an image characteristic registering unit configured to extract characteristic lines using line components extracted from the characteristic points shown as 3-dimensional coordinates and the image information and store the characteristic lines in the memory; and a second location recognizing unit configured to recognize a location of the moving robot based on the characteristic lines extracted from the image characteristic registering unit.

The moving robot may comprise a moving device for driving and a driving information sensing unit for sensing driving information when the housing is driven by the moving device.

The first location recognition module may reflect information output from the driving information sensing unit and extracts a straight line using the result value output from the distance sensor.

The moving device may include at least one wheel, and the driving information sensing unit includes a wheel sensor for sensing the number of rotations of the at least one wheel.

The moving robot may further comprise an illumination level sensor for sensing an illumination level

The capturing device is able to be used when the illumination level detected by the illumination level sensor is equal to or greater than a standard illumination level.

According to the present disclosure, the method of recognizing a location of the moving robot may include recognizing a location of the moving robot using the first location recognition module, determining whether a location can be recognized using the second location recognition module, and, by the second location recognition module, finally recognizing and determining a location by reflecting the location recognized by the first location recognition module when a location can be recognized by the second location recognition module, and recognizing and determining the location recognized by the first location recognition module as a final location when a location cannot be recognized by the second location recognition module.

The first location recognition module measures a distance between the moving robot and an object around the moving robot using a distance sensor to extract a straight line and recognizes a location.

The first location recognition module extract a straight line by reflecting the information output from the driving information sensing unit for sensing driving of the moving robot and measuring a distance between the moving robot and an object around the moving robot using the distance sensor.

The second location recognition module recognizes a location by extracting a characteristic line from image information obtained from a capturing device.

The details of one or more embodiments are set forth in the accompanying drawings and the description below. Other features will be apparent from the description and drawings, and from the claims.

### BRIEF DESCRIPTION OF THE DRAWINGS

FIG. 1 is a perspective view illustrating a moving robot according to one embodiment of the present invention;
FIG. 2 is a block diagram illustrating a configuration of the moving robot according to one embodiment of the present invention;
FIG. 3 is a flowchart describing a method of recognizing the location of the moving robot according to one embodiment of the present invention; and
FIG. 4 is a view illustrating a process of correcting a location and a process of moving the moving robot according to one embodiment of the present invention.

### DETAILED DESCRIPTION

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the appended claims. To avoid detail not necessary to enable those skilled in the art to practice the invention, the description may omit certain information known to those skilled in the art. The following detailed description is, therefore, not to be taken in a limiting sense.

Also, in the description of embodiments, terms such as first, second, A, B, (a), (b) or the like may be used herein when describing components of the present invention. Each of these terminologies is not used to define an essence, order or sequence of a corresponding component but used merely to distinguish the corresponding component from other component(s). It should be noted that if it is described in the specification that one component is "connected," "coupled" or "joined" to another component, the former may be directly "connected," "coupled," and "joined" to the latter or "connected", "coupled", and "joined" to the latter via another component.

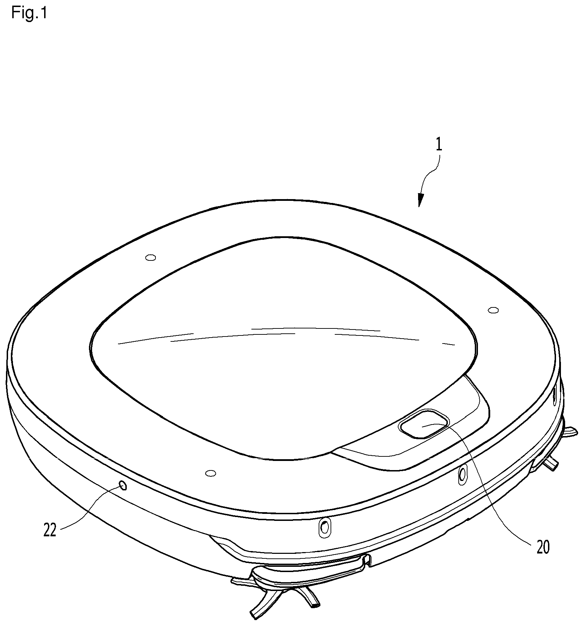

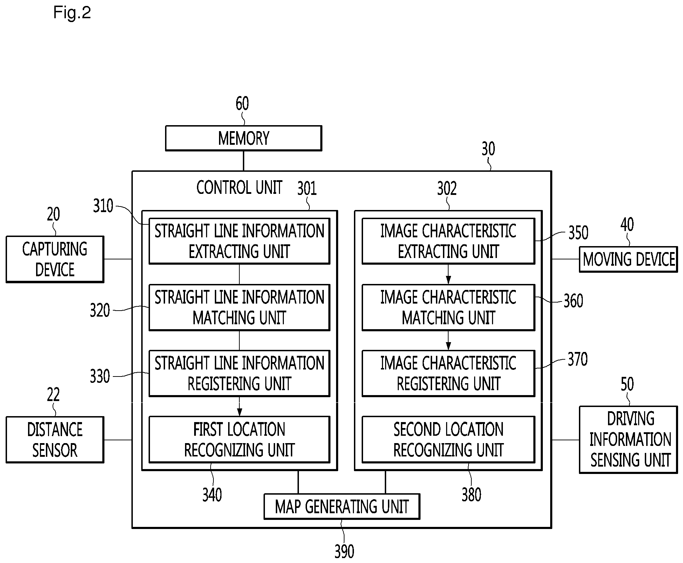

FIG. 1 is a perspective view illustrating a moving robot according to one embodiment of the present invention, and FIG. 2 is a block diagram illustrating a configuration of the moving robot according to one embodiment of the present invention.

Referring to FIGS. 1 and 2, a moving robot 1 according to an embodiment of the present invention, for example, may be a robot cleaner that can clean a floor while moving by itself. However, a technique for recognizing a location of the moving robot in the present invention may be applied to various robots as well as the robot cleaner.

The moving robot 1 may include a housing 10 forming an exterior. Although not shown, the housing 10 may include a suction motor for generating a suction force, a dust chamber for storing dust, and a part of or an entire battery for supplying power to the suction motor.

The moving robot 1 may further include a capturing device 20 obtaining an image by capturing an image of the surroundings of the moving robot 1. Although not limited, the capturing device 22 may be arranged to face upward or forward from the housing 10.

The capturing device 20 may include a lens having a wide view angle to capture an image of at least the entire ceiling of an area in which the moving robot 1 is positioned.

The moving robot 1 may further include a distance sensor 22 for sensing a distance between the moving robot 1 and an object around the moving robot 1.

The distance sensor 22 may be an infrared sensor, an ultrasonic sensor, a position sensitive device (PSD) sensor, etc. In the present invention, there is no limit to the type of the distance sensor 22. The distance sensor 22 may not only detect an obstacle, but also may detect an obstacle with a straight line.

The moving robot 1 may further include a moving device 40 for automatically moving the moving robot 1.

The moving device 40 may include at least one wheel and a motor for operating the at least one wheel. To easily change a direction of the moving robot 1 and easily move the moving robot 1, the moving device 40 may include a plurality of wheels and a plurality of motors for independently operating each of the plurality of wheels.

The moving robot 1 may further include the control unit 30. The control unit 30 may control the moving device 40 to move the moving robot 1.

Also, the control unit 30 may generate a map based on the information detected by the capturing device 20 and the distance sensor 22 and recognize the current location of the moving robot 1.

The moving robot 1 may further include a memory 60 for storing the information generated by the control unit 30. Of course, the memory 60 may further store control information for controlling the moving robot 1, operation history information of the moving robot 1, etc.

The moving robot 1 may further include a driving information sensing unit 50.

The driving information sensing unit 50 may include a wheel sensor.

The wheel sensor is connected to the plurality of wheels to detect the number of rotations of each of the wheels. Here, the wheel sensor may be a rotary encoder. The rotary encoder may detect and output the number of rotations of both right and left wheels.

The control unit 30 may compute a rotation speed of each wheel using the number of rotations detected by the wheel sensor. Also, the control unit 30 may compute a rotation angle using a difference between the numbers of rotations of each of the wheels.

The driving information sensing unit 50 may further include an acceleration sensor.

The acceleration sensor may detect a change in the speed of the moving robot 1, for example, a change in a movement speed caused by a start, a stop, a direction change, a collision with an obstacle, etc. The acceleration sensor may detect a wheel skid or idling. Also, the acceleration sensor is installed in the control unit 30 to detect a change in the speed of the moving robot. That is, the acceleration sensor may detect an amount of impact caused by the change in speed and may output a voltage value corresponding to the amount of impact. Therefore, the acceleration sensor may perform the function of an electronic bumper.

The control unit 30 may determine a change in location based on the operation information output from the driving information sensing unit 50 and may use the determined movement information to recognize a location.

The control unit 30 may include a first location recognition module 301 for recognizing the location of the moving robot 1 based on the information detected by the distance sensor 22.

The first location recognition module 301 may include a straight line information extracting unit 310 for extracting straight line information based on the information detected by the distance sensor 22.

While the moving robot 1 moves, the distance sensor 22 periodically outputs results of distances to surrounding objects. The results of reference numbers (N) output from the distance sensor 22 may be continuously stored in the memory 60.

Here, the results of reference numbers (N) stored in the memory 60 are result values showing distances from the moving robot 1 to each of the surrounding objects while the moving robot 1 moves.

The straight line information extracting unit 310 draws a virtual straight line connecting an initial result value with a final result value among the results of the reference numbers (N) stored in the memory 60, calculates minimum distances between each of N-2 result values stored in the memory 60 and the obtained virtual straight line and may determine whether the obtained straight line is actually a straight line or not.

When each of the minimum distances between the N-2 points and the obtained virtual straight line is smaller than a reference distance, the straight line information extracting unit 310 determines that the virtual straight line is actually a straight line.

That is, while the surrounding objects may have various shapes, a wall or a piece of furniture, etc. may have a straight line. Since there is a high probability in which a location of the wall or furniture is fixed, the accuracy of location recognition may be increased when the straight line included in the wall, the piece of furniture, or the like is used for the location recognition.

Also, in the case of a space such as a room, since the wall, furniture, or the like mostly includes a straight line, the accuracy of location recognition may be ensured in a space such as a room.

The first location recognition module 301 may further include a straight line information matching unit 320. The straight line information matching unit 320 may determine whether the straight line extracted from the straight line information extracting unit 310 is the same as the previously extracted straight line. In this case, the previously extracted straight line may have been stored in the memory 60 in advance.

The straight line information matching unit 320, for an example, determines whether a currently extracted straight line is the same as the previously extracted straight line by calculating the Mahalanobis' distance for the extracted straight line.

When the currently extracted straight line is the same as the previously extracted straight line, the straight line information matching unit 320 may match the currently extracted straight line to the previously extracted straight line to correct the location of the straight line. The correction of the location of the straight line may allow the current location of the moving robot to be corrected.

Of course, when the previously extracted straight line is not present, the straight line information matching unit 320 may recognize the currently extracted straight line as a new straight line.

The first location recognition module 301 may further include a straight line information registering unit 330. The straight line information registering unit 330 stores the straight line in the memory 60 when the extracted straight line is a new straight line and extends the existing straight line when the extracted straight line is the same as the previously extracted straight line.

The first location recognition module 301 may further include a first location recognizing unit 340 for recognizing a location of the moving robot 1. The first location recognizing unit 340 may recognize a location of the moving robot 1 based on a straight line registered by the straight line information registering unit 330 and driving information detected by the driving information sensing unit 50.

The control unit 30 may further include a second location recognition module 302 for finally recognizing the location of the moving robot 1 by reflecting a location of the moving robot initially recognized in the first location recognition module 301.

The second location recognition module 302 may include an image characteristic extracting unit 350. The image characteristic extracting unit 350 extracts a plurality of characteristic points by performing image-processing on the image information obtained from the capturing device 50.

The second location recognition module 302 may further include an image characteristic matching unit 360. The image characteristic matching unit 360 matches the plurality of characteristic points based on information on at least two successively captured images.

The second location recognition module 302 may further include an image characteristic registering unit 370. A plurality of characteristics points may be shown as 3-dimensional coordinates, and the image characteristic registering unit 370 may extract characteristic lines using the characteristic points shown as the 3-dimensional coordinates and line components extracted from the image information. Since a method of extracting characteristic lines from the image information varies depending on image-processing methods, a detailed description for the image-processing method will be omitted.

The image characteristic registering unit 370 may store the extracted characteristic lines in the memory 60.

The second location recognition module 302 may further include a second location recognizing unit 380 for recognizing a location of the moving robot 1 based on the characteristic line extracted from the image characteristic registering unit 370.

In this case, the second location recognizing unit 380 may finally determine a location by reflecting the location initially recognized by the first location recognizing unit 340.

The control unit 30 may further include a map generating unit 390. The map generating unit 390 may generate a map using the straight line obtained from the first location recognition module 301 and the characteristic line provided from the second location recognition module 302.

Here, when the map generating unit 390 generates the map, the first and second location recognition modules 301 and 302 may recognize the current location of the moving robot 1 on the map.

Hereinafter, a method of recognizing a location of the moving robot 1 will be described below.

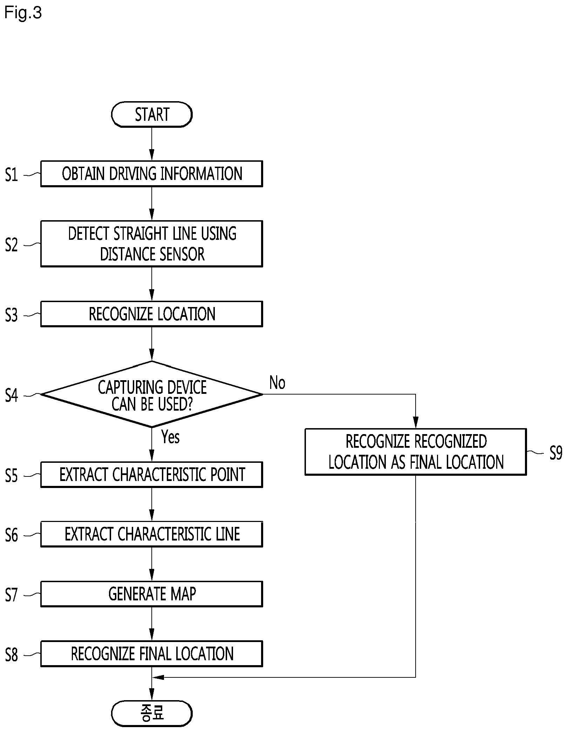

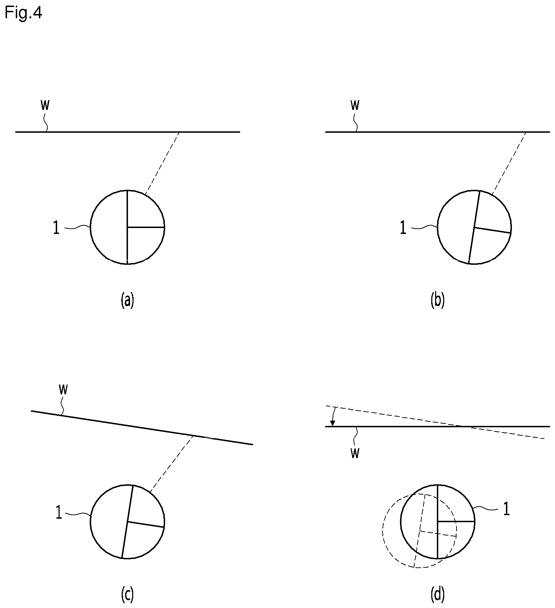

FIG. 3 is a flowchart describing a method of recognizing the moving robot according to one embodiment of the present invention, and FIG. 4 is a view illustrating a process of correcting a location and a process of moving the moving robot according to one embodiment of the present invention.

Referring to FIG. 3, while the moving robot 1 is driven by the moving device 40, driving information is obtained by the driving information sensing unit 50 (S1).

While the moving robot 1 moves, the distance sensor 22 periodically outputs a result value for a distance between the moving robot 1 and an object around the moving robot 1, and the first location recognition module 301 extracts a straight line based on the result value output from the distance sensor 22 (S2).

Also, the moving robot 1 recognizes its current location by using the extracted straight line and reflecting the obtained driving information (S3).

As shown in FIG. 4(a), the moving robot 1 may drive parallel to a straight line of the wall. While the moving robot 1 moves, the moving robot 1 as shown in FIG. 4(b) may lose its posture due to slipping on the floor. In this case, as shown in FIG. 4(b), although the moving robot slips, an absolute location of the straight line of the wall is not actually changed.

However, the moving robot 1 recognizes the straight line having the shape in FIG. 4(c) due to the slipping of the moving robot. When the straight line is recognized in the manner above, a predicted movement direction of the moving robot 1 is changed, and thus location recognition errors are accumulated.

Therefore, the first location recognition module 301 may accurately recognize the current location of the moving robot by correcting an angle by matching the extracted straight line with the previously extracted straight line.

After the location of the moving robot 1 is initially recognized by the first location recognition module 301, the control unit 30 may determine whether the capturing device 20 can be used (S4).

In the embodiment of the present invention, the capturing device 20 can be used when the capturing device 20 is operational and an illumination level detected in an illumination level sensor not shown is equal to or greater than a standard illumination level.

When the illumination level detected in the illumination level sensor is less than the standard illumination level, it is difficult to recognize a location using the image information captured in the capturing device 20.

Also, even when the illumination level detected by the illumination level sensor is equal to or greater than the standard illumination level, when the capturing device 20 is abnormal, a location cannot be recognized by the capturing device 20.

Therefore, as a result of the determination in the operation S4, when the capturing device 20 can be used, the second location recognition module 302 may finally recognize the location of the the moving robot 1 based on the image information determined by the capturing device 20.

That is, the characteristic points are extracted from the image information obtained from the capturing device 20 (S5), characteristic lines are extracted using the extracted characteristic points (S6), and a final location may be recognized (S8). Of course, a map may be generated using the extracted characteristics lines (S7).

On the other hand, when the capturing device 20 cannot be used, the first location recognition module 301 may use the initially recognized location as a final location (S9).

Summarizing the description of the present invention, the method of recognizing a location by the first location recognition module is different from the method of recognizing a location by the second location recognition module.

Further, when the capturing device can be used, a location can be recognized by the second location recognition module. Said another way, when the capturing device cannot be used, a location cannot be recognized by the second location recognition module.

In the embodiment of the present invention, when a location can be recognized by the second location recognition module after the location recognition is initially performed using the first location recognition module, the second location recognition module may finally recognize the location by reflecting the location recognized in the first location recognition module. When a location cannot be recognized by the second location recognition module, the location initially recognized by the first location recognition module is recognized and determined as the final location.

According to the embodiment of the present invention, by having the first location recognition module which extracts straight lines and recognizes a location by performing a matching between the straight lines, location recognition error caused by slipping or losing its posture in a driving process may be minimized.

Also, when the capturing device can be used, by having the second location recognition module which finally recognizes a location based on the location initially recognized by the first location recognition module, location recognition accuracy can be advantageously increased.

Also, even when the capturing device cannot be used, since the location recognized by the first location recognition module may be used as a final location, the location can be accurately recognized regardless of a circumstance or a condition of the capturing device.

Therefore, when recognition of the location of the moving robot becomes accurate, non-cleaned area on the map may be reduced.

## Claims

1. A moving robot comprising:
a first location recognition module (301) configured to extract a straight line in a driving process and recognize a location using the extracted straight line; and
a second location recognition module (302) configured to recognize a location based on the location recognized by the first location recognition module (301) and based on image information obtained from surroundings,
wherein the moving robot further comprises a distance sensor (22) and a memory (60) configured to store the straight line extracted by the first location recognition module (301), and
wherein the first location recognition module (301) includes:
a straight line information extracting unit (310) configured to extract straight line information from values output from the distance sensor (22);
a straight line information matching unit (320) configured to determine whether the straight line extracted from the straight line information extracting unit (310) is the same as the previously extracted straight line stored in the memory (60);
a straight line information registering unit (330) configured to store the straight line in the memory (60) when the extracted straight line is a new straight line and extend the previously extracted straight line when the extracted straight line is the same as the previously extracted straight line; and
a first location recognizing unit (340) configured to recognize a current location using the straight line registered by the straight line information registering unit (330).

2. The moving robot according to claim 1, further comprising a capturing device (20) configured to obtain the image information,
wherein the second location recognition module (302) finally recognizes a location when the capturing device (20) is able to be used, and determines the location recognized by the first location recognition module (301) as a final location when the capturing device (20) is not able to be used.

3. The moving robot according to claim 2, wherein the second location recognition module (302) includes:
an image characteristic extracting unit (350) configured to extract a plurality of characteristic points by performing image-processing on the image information obtained from the capturing device (20);
an image characteristic matching unit (360) configured to match the plurality of characteristic points based on information on at least two successively captured images;
an image characteristic registering unit (370) configured to extract characteristic lines using line components extracted from the characteristic points shown as 3-dimensional coordinates and the image information and store the characteristic lines in the memory (60); and
a second location recognizing unit (380) configured to recognize a location of the moving robot based on the characteristic lines extracted from the image characteristic registering unit (370).

4. The moving robot according to claim 2, further comprising a moving device (40) for driving and a driving information sensing unit (50) for sensing driving information when the housing is driven by the moving device (40),
wherein the first location recognition module (301) extracts a straight line using the result value output from the distance sensor (22) and based on information output from the driving information sensing unit (50).

5. The moving robot according to claim 4, wherein the moving device (40) includes at least one wheel, and the driving information sensing unit (50) includes a wheel sensor for sensing the number of rotations of the at least one wheel.

6. The moving robot according to claim 2, further comprising an illumination level sensor for sensing an illumination level,
wherein the capturing device (20) is able to be used when the illumination level detected by the illumination level sensor is equal to or greater than a standard illumination level.

7. A method of recognizing a location of a moving robot, the method comprising:
recognizing a location of the moving robot (1) using a first location recognition module (301);
determining whether a location is able to be recognized using a second location recognition module (302); and
by the second location recognition module (302), recognizing and determining a location based on the location recognized by the first location recognition module (301) when a location is able to be recognized by the second location recognition module (302), and recognizing and determining the location recognized by the first location recognition module (301) as a final location when a location is not able to be recognized by the second location recognition module (302),
wherein the first location recognition module (301) measures a distance between the moving robot (1) and an object around the moving robot (1) using a distance sensor (22) and recognizes a location, and
wherein the first location recognition module (301) includes:
a straight line information extracting unit (310) configured to extract straight line information from values output from the distance sensor (22);
a straight line information matching unit (320) configured to determine whether the straight line extracted from the straight line information extracting unit (310) is the same as the previously extracted straight line stored in a memory (60);
a straight line information registering unit (330) configured to store the straight line in the memory (60) when the extracted straight line is a new straight line and extend the previously extracted straight line when the extracted straight line is the same as the previously extracted straight line; and
a first location recognizing unit (340) configured to recognize a current location using the straight line registered by the straight line information registering unit (330).

8. The method according to claim 7, wherein the first location recognition module (301) extracts a straight line based on the information output from the driving information sensing unit (50) for sensing driving of the moving robot (1) and based on measuring a distance between the moving robot (1) and an object around the moving robot (1) using the distance sensor (22).

9. The method according to claim 7, wherein the second location recognition module (302) recognizes a location by extracting a characteristic line from image information obtained from a capturing device (20).

## Patentansprüche

1. Bewegungsroboter, der Folgendes umfasst:
ein erstes Positionserkennungsmodul (301), das konfiguriert ist, eine gerade Linie in einem Antriebsvorgang zu extrahieren und eine Position unter Verwendung der extrahierten geraden Linie zu erkennen; und
ein zweites Positionserkennungsmodul (302), das konfiguriert ist, eine Position auf der Basis der Position, die durch das erste Positionserkennungsmodul (301) erkannt wurde, und auf der Basis von Bildinformationen, die aus der Umgebung erhalten wurden, zu erkennen,
wobei der Bewegungsroboter ferner einen Abstandssensor (22) und einen Speicher (60), der konfiguriert ist, die gerade Linie zu speichern, die durch das erste Positionserkennungsmodul (301) extrahiert wurde, umfasst, und
wobei das erste Positionserkennungsmodul (301) Folgendes umfasst:
eine Einheit (310) zum Extrahieren von Informationen bezüglich einer geraden Linie, die konfiguriert ist, Informationen bezüglich einer geraden Linie aus Werten zu extrahieren, die von dem Abstandssensor (22) ausgegeben werden;
eine Einheit (320) zum Abgleichen von Informationen bezüglich einer geraden Linie, die konfiguriert ist, festzustellen, ob die gerade Linie, die von der Einheit (310) zum Extrahieren von Informationen bezüglich einer geraden Linie extrahiert wurde, die gleiche Linie wie die zuvor extrahierte gerade Linie ist, die in dem Speicher (60) gespeichert ist;
eine Einheit (330) zum Registrieren von Informationen bezüglich einer geraden Linie, die konfiguriert ist, die gerade Linie in dem Speicher (60) zu speichern, wenn die extrahierte gerade Linie eine neue gerade Linie ist, und die zuvor extrahierte gerade Linie zu verlängern, wenn die extrahierte gerade Linie die gleiche Linie wie die zuvor extrahierte gerade Linie ist; und
eine erste Positionserkennungseinheit (340), die konfiguriert ist, eine aktuelle Position unter Verwendung der geraden Linie, die durch die Einheit (330) zum Registrieren von Informationen bezüglich einer geraden Linie registriert wurde, zu erkennen.

2. Bewegungsroboter nach Anspruch 1, der ferner eine Erfassungsvorrichtung (20) umfasst, die konfiguriert ist, die Bildinformationen zu erhalten,
wobei das zweite Positionserkennungsmodul (302) letztlich eine Position erkennt, wenn die Erfassungsvorrichtung (20) verwendet werden kann, und die Position, die durch das erste Positionserkennungsmodul (301) erkannt wurde, als eine letzte Position bestimmt, wenn die Erfassungsvorrichtung (20) nicht verwendet werden kann.

3. Bewegungsroboter nach Anspruch 2, wobei das zweite Positionserkennungsmodul (302) Folgendes umfasst:
eine Einheit (350) zum Extrahieren von Bildeigenschaften, die konfiguriert ist, mehrere charakteristische Punkte zu extrahieren, indem eine Bildverarbeitung bei den Bildinformationen durchgeführt wird, die von der Erfassungsvorrichtung (20) erhalten werden;
eine Einheit (360) zum Abgleichen von Bildeigenschaften, die konfiguriert ist, die mehreren charakteristischen Punkte auf der Basis von Informationen bei wenigstens zwei nacheinander erfassten Bildern abzugleichen;
eine Einheit (370) zum Registrieren von Bildeigenschaften, die konfiguriert ist, charakteristische Linien unter Verwendung von Linienbestandteilen, die aus den charakteristischen Punkten, die als dreidimensionale Koordinaten gezeigt werden, und den Bildinformationen zu extrahieren und die charakteristischen Linien in dem Speicher (60) zu speichern; und
eine zweite Positionserkennungseinheit (380), die konfiguriert ist, eine Position des Bewegungsroboters auf der Basis der charakteristischen Linien, die von der Einheit (370) zum Registrieren von Bildeigenschaften extrahiert wurden, zu erkennen.

4. Bewegungsroboter nach Anspruch 2, der ferner eine Bewegungsvorrichtung (40) zum Antreiben und eine Antriebsinformationen-Erfassungseinheit (50) zum Erfassen von Antriebsinformationen, wenn das Gehäuse durch die Bewegungsvorrichtung (40) angetrieben wird, umfasst,
wobei das erste Positionserkennungsmodul (301) eine gerade Linie unter Verwendung des Ergebniswerts, der von dem Abstandssensor (22) ausgegeben wird, und auf der Basis von Informationen, die von der Antriebsinformationen-Erfassungseinheit (5) ausgegeben werden, extrahiert.

5. Bewegungsroboter nach Anspruch 4, wobei die Bewegungsvorrichtung (40) wenigstens ein Rad umfasst und wobei die Antriebsinformationen-Erfassungseinheit (50) einen Radsensor zum Erfassen der Drehzahl des wenigstens einen Rads umfasst.

6. Bewegungsroboter nach Anspruch 2, der ferner einen Beleuchtungsstärkesensor zum Erfassen einer Beleuchtungsstärke umfasst,
wobei die Erfassungsvorrichtung (20) verwendet werden kann, wenn die Beleuchtungsstärke, die durch den Beleuchtungsstärkesensor detektiert wird, gleich einer Standardbeleuchtungsstärke oder höher ist.

7. Verfahren zum Erkennen einer Position eines Bewegungsroboters, wobei das Verfahren die folgenden Schritte umfasst:
Erkennen einer Position des Bewegungsroboters (1) unter Verwendung eines ersten Positionserkennungsmoduls (301);
Feststellen, ob eine Position unter Verwendung eines zweiten Positionserkennungsmoduls (302) erkannt werden kann; und
durch das zweite Positionserkennungsmodul (302) Erkennen und Bestimmen einer Position auf der Basis der Position, die durch das erste Positionserkennungsmodul (301) erkannt wurde, wenn eine Position durch das zweite Positionserkennungsmodul (302) erkannt werden kann, und Erkennen und Bestimmen der Position, die durch das erste Positionserkennungsmodul (301) erkannt wurde, als eine letzte Position, wenn eine Position durch das zweite Positionserkennungsmodul (302) nicht erkannt werden kann,
wobei das erste Positionserkennungsmodul (301) einen Abstand zwischen dem Bewegungsroboter (1) und einem Objekt um den Bewegungsroboter (1) unter Verwendung eines Abstandssensors (22) misst und eine Position erkennt, und
wobei das erste Positionserkennungsmodul (301) Folgendes umfasst:
eine Einheit (310) zum Extrahieren von Informationen bezüglich einer geraden Linie, die konfiguriert ist, Informationen bezüglich einer geraden Linie aus Werten zu extrahieren, die von dem Abstandssensor (22) ausgegeben werden;
eine Einheit (320) zum Abgleichen von Informationen bezüglich einer geraden Linie, die konfiguriert ist, festzustellen, ob die gerade Linie, die von der Einheit (310) zum Extrahieren von Informationen bezüglich einer geraden Linie extrahiert wurden, die gleiche Linie wie die zuvor extrahierte gerade Linie ist, die in einem Speicher (60) gespeichert ist;
eine Einheit (330) zum Registrieren von Informationen bezüglich einer geraden Linie, die konfiguriert ist, die gerade Linie in dem Speicher (60) zu speichern, wenn die extrahierte gerade Linie eine neue gerade Linie ist, und die zuvor extrahierte gerade Linie zu verlängern, wenn die extrahierte gerade Linie die gleiche Linie wie die zuvor extrahierte gerade Linie ist; und
eine erste Positionserkennungseinheit (340), die konfiguriert ist, eine aktuelle Position unter Verwendung der geraden Linie, die durch die Einheit (330) zum Registrieren von Informationen bezüglich einer geraden Linie registriert wurde, zu erkennen.

8. Verfahren nach Anspruch 7, wobei das erste Positionserkennungsmodul (301) eine gerade Linie auf der Basis der Informationen, die von der Antriebsinformationen-Erfassungseinheit (50) zum Erfassen des Antriebs des Bewegungsroboters (1) ausgegeben wurden, und auf der Basis einer Messung eines Abstands zwischen dem Bewegungsroboter (1) und einem Objekt um den Bewegungsroboter (1) unter Verwendung des Abstandssensors (22) extrahiert.

9. Verfahren nach Anspruch 7, wobei das zweite Positionserkennungsmodul (302) eine Position durch Extrahieren einer charakteristischen Linie aus Bildinformationen erkennt, die von einer Erfassungsvorrichtung (20) erhalten wurden.

## Revendications

1. Robot mobile comportant :
un premier module de reconnaissance d'emplacement (301) configuré pour extraire une ligne droite dans un processus d'entraînement et reconnaître un emplacement en utilisant la ligne droite extraite ; et
un second module de reconnaissance d'emplacement (302) configuré pour reconnaître un emplacement sur la base de l'emplacement reconnu par le premier module de reconnaissance d'emplacement (301) et sur la base d'informations d'images obtenues à partir des alentours,
dans lequel le robot mobile comporte en outre un capteur de distance (22) et une mémoire (60) configurée pour mémoriser la ligne droite extraite par le premier module de reconnaissance d'emplacement (301), et
dans lequel le premier module de reconnaissance d'emplacement (301) inclut :
une unité d'extraction d'informations de ligne droite (310) configurée pour extraire des informations de ligne droite à partir de valeurs délivrées en sortie du capteur de distance (22) ;
une unité de mise en correspondance d'informations de ligne droite (320) configurée pour déterminer si la ligne droite extraite à partir de l'unité d'extraction d'informations de ligne droite (310) est la même que la ligne droite précédemment extraite stockée dans la mémoire (60) ;
une unité d'enregistrement d'informations de ligne droite (330) configurée pour stocker la ligne droite dans la mémoire (60) lorsque la ligne droite extraite est une nouvelle ligne droite et prolonger la ligne droite précédemment extraite lorsque la ligne droite extraite est la même que la ligne droite précédemment extraite ; et
une première unité de reconnaissance d'emplacement (340) configurée pour reconnaître un emplacement actuel en utilisant la ligne droite enregistrée par l'unité d'enregistrement d'informations de ligne droite (330).

2. Robot mobile selon la revendication 1, comportant en outre un dispositif de capture (20) configuré pour obtenir les informations d'images,
dans lequel le second module de reconnaissance d'emplacement (302) reconnaît finalement un emplacement lorsque le dispositif de capture (20) peut être utilisé, et détermine l'emplacement reconnu par le premier module de reconnaissance d'emplacement (301) comme étant un emplacement final lorsque le dispositif de capture (20) ne peut pas être utilisé.

3. Robot mobile selon la revendication 2, dans lequel le second module de reconnaissance d'emplacement (302) inclut :
une unité d'extraction de caractéristiques d'images (350) configurée pour extraire une pluralité de points caractéristiques en exécutant un traitement d'images sur les informations d'images obtenues à partir du dispositif de capture (20) ;
une unité de mise en correspondance de caractéristiques d'images (360) configurée pour mettre en correspondance la pluralité de points caractéristiques sur la base d'informations concernant au moins deux images successivement capturées ;
une unité d'enregistrement de caractéristiques d'images (370) configurée pour extraire des lignes caractéristiques en utilisant des composantes de lignes extraites des points caractéristiques représentés sous forme de coordonnées tridimensionnelles et les informations d'images, et stocker les lignes caractéristiques dans la mémoire (60) ; et
une seconde unité de reconnaissance d'emplacement (380) configurée pour reconnaître un emplacement du robot mobile sur la base des lignes caractéristiques extraites de l'unité d'enregistrement de caractéristiques d'images (370).

4. Robot mobile selon la revendication 2, comportant en outre un dispositif mobile (40) pour l'entraînement et une unité de détection d'informations d'entraînement (50) pour détecter des informations d'entraînement lorsque le boîtier est entraîné par le dispositif mobile (40),
dans lequel le premier module de reconnaissance d'emplacement (301) extrait une ligne droite en utilisant la valeur de résultat délivrée en sortie du capteur de distance (22) et sur la base d'informations délivrées en sortie de l'unité de détection d'informations d'entraînement (50).

5. Robot mobile selon la revendication 4, dans lequel le dispositif mobile (40) inclut au moins une roue, et l'unité de détection d'informations d'entraînement (50) inclut un capteur de roue pour détecter le nombre de rotations de la au moins une roue.

6. Robot mobile selon la revendication 2, comportant en outre un capteur de niveau d'éclairage pour détecter un niveau d'éclairage,
dans lequel le dispositif de capture (20) peut être utilisé lorsque le niveau d'éclairage détecté par le capteur de niveau d'éclairage est égal ou supérieur à un niveau d'éclairage standard.

7. Procédé de reconnaissance d'un emplacement d'un robot mobile, le procédé comportant les étapes consistant à :
reconnaître un emplacement du robot mobile (1) en utilisant un premier module de reconnaissance d'emplacement (301) ;
déterminer si un emplacement peut être reconnu en utilisant un second module de reconnaissance d'emplacement (302) ; et
par le second module de reconnaissance d'emplacement (302), reconnaître et déterminer un emplacement sur la base de l'emplacement reconnu par le premier module de reconnaissance d'emplacement (301) lorsqu'un emplacement peut être reconnu par le second module de reconnaissance d'emplacement (302), et reconnaître et déterminer l'emplacement reconnu par le premier module de reconnaissance d'emplacement (301) comme étant un emplacement final lorsqu'un emplacement ne peut pas être reconnu par le second module de reconnaissance d'emplacement (302),
dans lequel le premier module de reconnaissance d'emplacement (301) mesure une distance entre le robot mobile (1) et un objet autour du robot mobile (1) en utilisant un capteur de distance (22), et reconnaît un emplacement, et
dans lequel le premier module de reconnaissance d'emplacement (301) inclut :
une unité d'extraction d'informations de ligne droite (310) configurée pour extraire des informations de ligne droite à partir de valeurs délivrées en sortie du capteur de distance (22) ;
une unité de mise en correspondance d'informations de ligne droite (320) configurée pour déterminer si la ligne droite extraite à partir de l'unité d'extraction d'informations de ligne droite (310) est la même que la ligne droite précédemment extraite stockée dans une mémoire (60) ;
une unité d'enregistrement d'informations de ligne droite (330) configurée pour stocker la ligne droite dans la mémoire (60) lorsque la ligne droite extraite est une nouvelle ligne droite et prolonger la ligne droite précédemment extraite lorsque la ligne droite extraite est la même que la ligne droite précédemment extraite ; et
une première unité de reconnaissance d'emplacement (340) configurée pour reconnaître un emplacement actuel en utilisant la ligne droite enregistrée par l'unité d'enregistrement d'informations de ligne droite (330).

8. Procédé selon la revendication 7, dans lequel le premier module de reconnaissance d'emplacement (301) extrait une ligne droite sur la base des informations délivrées en sortie de l'unité de détection d'informations d'entraînement (50) pour détecter un entraînement du robot mobile (1) et sur la base d'une mesure d'une distance entre le robot mobile (1) et un objet autour du robot mobile (1) en utilisant le capteur de distance (22).

9. Procédé selon la revendication 7, dans lequel le second module de reconnaissance d'emplacement (302) reconnaît un emplacement en extrayant une ligne caractéristique à partir d'informations d'images obtenues à partir d'un dispositif de capture (20).
